# EUROPEAN PATENT APPLICATION

(11) **EP 2 006 807 A2**
(43) Date of publication of application: **24.12.2008**
(21) Application number: 08016186.2
(22) Date of filing: 25.02.2004
(51) Int. Cl.: G06T 13/00, G06F 3/14, G06F 17/21, H04M 1/00, G09G 5/377

(54) **Text data display device capable of appropriately displaying text data**

(30) Priority: 14.04.2003 JP 2003109180
(62) Divisional of application: 04714468.8
(71) Applicant: Sharp Kabushiki Kaisha, Osaka-shi, Osaka 545-8522 (JP)
(72) Inventor: Zaima, Hiroaki, Nara 632-0004 (JP)
(74) Representative: Brown, Kenneth Richard

(57) **Abstract**

A text data displaying apparatus, comprises:
a text data analyze unit (101) that has a correspondence table associating a pictorial character and animation data and that analyzes a pictorial character included in text data being input;
an animation data determine unit (104) determining animation data corresponding to the pictorial character having been analyzed using said correspondence table;
a text data drawing unit (107) writing the text data having been input;
an animation data drawing unit (106) writing the animation data having been determined; and
a screen display unit (109) displaying the text data having been written and the animation data having been written so as to be overlapped with each other.

## Description

### Technical Field

The present invention relates to a text data displaying apparatus, a mobile phone apparatus, a text data displaying method, and a text data displaying program, and particularly, to a text data displaying apparatus, a mobile phone apparatus, a text data displaying method, and a text data displaying program capable of displaying text data appropriately.

### Background Art

With a general e-mail browser as an exemplary conventional text data displaying apparatus, for example, for an HTML (Hyper Text Markup Language) mail that contains no additional information such as format or URL (Uniform Resource Locator) of an image except for the text to be displayed, only simple and plain text data is displayed. Additionally, with a conventional text data displaying apparatus, when displaying a mail with attached animation data, plain text data is displayed and the animation data is displayed below.

Japanese Patent Laying-Open No. 9-81353 discloses a displaying apparatus that classifies, from a character string in which an interactive character string and a control character string are continuously input, the interactive character string and the control character string, and converts the control character string into a corresponding image, to be displayed with the interactive character string. Since an expression of emotion can be instructed as the control character string using such a displaying apparatus, an image corresponding to the expression of emotion can be displayed simultaneously with the interactive character string.

However, such a general e-mail browser is on the premise that the creator of the e-mail sends animation data to be displayed with text data. That is, there has been a problem that the creator of the text data must prepare animation data separately from the text data.

Further, there has been a problem that, as text data and animation data are sent when communicating such data, the data volume necessarily increases as compared to the case where only text data is sent.

Still further, with the displaying apparatus disclosed in Japanese Patent Laying-Open No. 9-81353, there has been a problem that a burden of a creator is great when creating text data, since control characters that are not displayed as text along with interactive character strings must be inserted among the interactive character strings, considering the animation after conversion.

The present invention has been made in light of the foregoing problems, and it is an object of the present invention to provide a text data displaying apparatus, a mobile phone apparatus, a text data displaying method, and a text data displaying program that allow a user to enjoyably and comfortably view the text data that has been simply created.

### Disclosure of the Invention

In order to achieve the aforementioned object, according to one aspect of the present invention, a text data displaying apparatus includes: a correspondence table acquisition unit acquiring a correspondence table associating a character string and animation data; a text data analyze unit analyzing text data based on the correspondence table; an animation data determine unit determining animation data corresponding to the text data based on a result of the analysis; an animation data acquisition unit acquiring the determined animation data; an animation data drawing unit writing the acquired animation data to a prescribed memory area for animation drawing; a text drawing unit writing the text data to the prescribed memory area for text drawing; and a screen display unit displaying the animation data and the text having been written to the prescribed memory area to be overlapped with each other.

According to another aspect of the present invention, a text data displaying apparatus includes: a character string count unit obtaining a count result by counting number of occurrence of a character string included in text data; a correspondence table acquisition unit acquiring a correspondence table associating the number of occurrence of the character string and animation data; an animation data determine unit determining animation data that corresponds to the count result by referring to the correspondence table; an animation data acquisition unit acquiring the determined animation data; an animation data drawing unit writing the acquired animation data to a prescribed memory area for animation drawing; a text drawing unit writing the text data to the prescribed memory area for text drawing; and a screen display unit displaying the animation data and the text having been written to the prescribed memory area to be overlapped with each other.

According to still another aspect of the present invention, a mobile phone apparatus includes the aforementioned text data displaying apparatus.

According to still another aspect of the present invention, a text data displaying method includes: a correspondence table acquisition step of acquiring a correspondence table associating a character string and animation data; a text data analyze step of analyzing text data based on the correspondence table; an animation data determine step of determining animation data corresponding to the text data based on a result of the analysis; an animation data acquisition step of acquiring the determined animation data; an animation data drawing step of writing the acquired animation data to a prescribed memory area for animation drawing; a text drawing step of writing the text data to the prescribed memory area for text drawing; and a screen display step of displaying the animation data and the text having been written to the prescribed memory area to be overlapped with each other.

According to still another aspect of the present invention, a text data displaying method includes: a character string count step of obtaining a count result by counting number of occurrence of a character string included in text data; a correspondence table acquisition step of acquiring a correspondence table associating the number of occurrence of the character string and animation data; an animation data determine step of determining animation data that corresponds to the count result by referring to the correspondence table; an animation data acquisition step of acquiring the determined animation data; an animation data drawing step of writing the acquired animation data to a prescribed memory area for animation drawing; a text drawing step of writing the text data to the prescribed memory area for text drawing; and a screen display step of displaying the animation data and the text having been written to the prescribed memory area to be overlapped with each other.

According to still another aspect of the present invention, a text data displaying program for causing a computer to display text data is provided. The text data displaying program causes the computer to execute: a correspondence table acquisition step of acquiring a correspondence table associating a character string and animation data; a text data analyze step of analyzing text data based on the correspondence table; an animation data determine step of determining animation data corresponding to the text data based on a result of the analysis; an animation data acquisition step of acquiring the determined animation data; an animation data drawing step of writing the acquired animation data to a prescribed memory area for animation drawing; a text drawing step of writing the text data to the prescribed memory area for text drawing; and a screen display step of displaying the animation data and the text having been written to the prescribed memory area to be overlapped with each other.

According to still another aspect of the present invention, a text data displaying program for causing a computer to display text data is provided. The text data displaying program causes the computer to execute: a character string count step of obtaining a count result by counting number of occurrence of a character string included in text data; a correspondence table acquisition step of acquiring a correspondence table associating the number of occurrence of the character string and animation data; an animation data determine step of determining animation data that corresponds to the count result by referring to the correspondence table; an animation data acquisition step of acquiring the determined animation data; an animation data drawing step of writing the acquired animation data to a prescribed memory area for animation drawing; a text drawing step of writing the text data to the prescribed memory area for text drawing; and a screen display step of displaying the animation data and the text having been written to the prescribed memory area to be overlapped with each other.

According to still another aspect of the present invention, a computer readable recording medium recording the aforementioned text data displaying program is provided.

### Brief Description of the Drawings

Fig. 1 is a block diagram showing a specific example of a functional configuration of a text data displaying apparatus 1 according to the present embodiment.
Fig. 2 is a flowchart showing a text data display process for displaying text data with text data displaying apparatus 1 according to the present embodiment.
Fig. 3 shows a specific example of text display of text data.
Fig. 4 shows a specific example of a correspondence table.
Fig. 5 shows another specific example of a correspondence table.
Fig. 6 shows a specific example of animation data.
Figs. 7A - 7C sequentially show a specific example of displaying animation data and text data.
Fig. 8 shows a time line specific example where a plurality of pieces of animation data are reproduced in turn.
Figs. 9-14 show first to sixth display screens.
Fig. 15 shows a specific example of timing of writing animation data to a drawing memory 108.
Figs. 16A and 16B show specific examples of first and second methods for writing animation data to a memory area.
Figs. 17 and 18 respectively show specific examples of timing of first and second methods, from overlapping text data and animation data to updating screen display.
Fig. 19 shows a specific example of animation data including information as to a manner of displaying text data.
Fig. 20 shows a specific example of text data described in HTML.
Fig. 21 shows a specific example of an address book.
Fig. 22 shows a modification of a usage manner of text data displaying apparatus 1.
Fig. 23 shows a specific example of a header portion of an Internet mail.
Figs. 24-26 show other specific examples of correspondence tables.
Figs. 27A-27C show specific examples of text data of mails 1-3.
Fig. 28 shows a specific example of the type and the number of retrieve character strings included in text data.
Fig. 29 shows a specific example of a retrieve character string table.
Fig. 30 shows another specific example of a correspondence table.
Fig. 31 is a block diagram showing a specific example of a hardware configuration of text data displaying apparatus 1 according to the present embodiment.

### Best Modes for Carrying Out the Invention

In the following, referring to the drawings, an embodiment of the present invention will be described. In the following description, the same reference character is allotted to the same components and constituents. The name and function of them are also the same. Accordingly, detailed description thereof is not repeated.

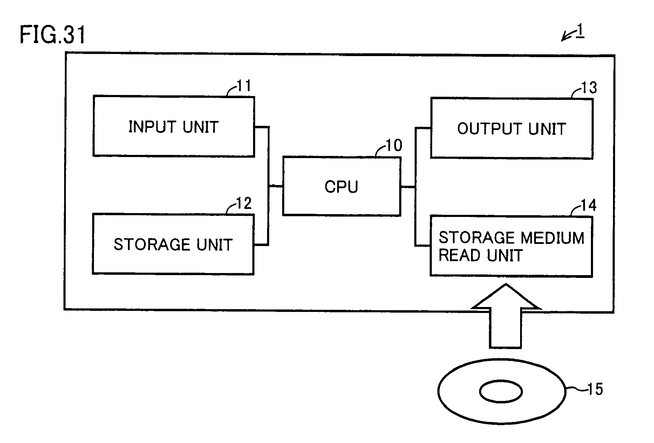

Referring to Fig. 31, a text data displaying apparatus 1 according to the present embodiment includes CPU (Central Processing Unit) 10, whereby the entire text data displaying apparatus 1 is controlled.

Text data displaying apparatus 1 includes an input unit 11 for performing data input and instruction input. A button, a keyboard and a mouse for a user to perform operation input, and a communication apparatus for obtaining data from another apparatus correspond to input unit 11.

Text data displaying apparatus 1 includes a storage unit 12 for storing a program executed at CPU 10 and data such as text data to be displayed at text data displaying apparatus 1. Storage unit 12 includes HDD (Hard disk Drive), ROM (Read Only Memory) and RAM (Random Access Memory), and RAM also serves as a workspace when a program is executed at CPU 10.

Text data displaying apparatus 1 also includes a storage medium read unit 14 for reading data, a program and the like from a storage medium 15 such as CD-ROM (Compact Disk-Read Only Memory), and it is capable of reading text data or the like to be displayed and a program executed at CPU 10.

Text data displaying apparatus 1 also includes an output unit 13. A display for achieving screen display of text data corresponds to output unit 13. It may be a communication apparatus for outputting data to another apparatus.

The specific example of the hardware configuration of text data displaying apparatus 1 shown in Fig. 31 is a specific example of a hardware configuration of a general computer when text data displaying apparatus 1 is structured by a general computer, and it is not limited to this configuration. For example, text data displaying apparatus 1 can be configured with an apparatus such as a mobile phone or PDA (Personal Digital Assistant) other than a computer. In such a case, hardware configurations corresponding to respective apparatuses are further included.

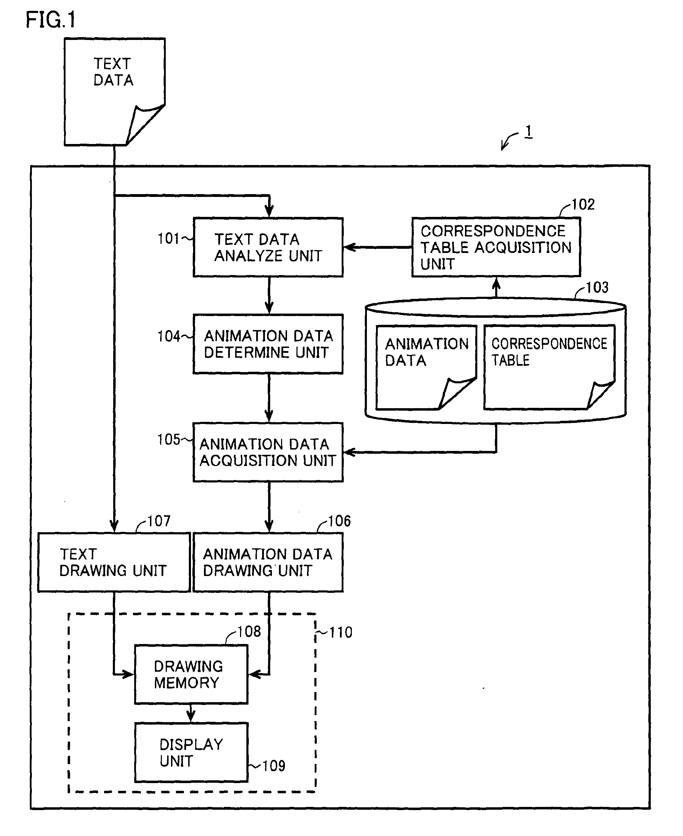

Next, referring to Fig. 1, text data display apparatus 1 is configured to include functions of a text data analyze unit 101 analyzing text data, a correspondence table acquisition unit 102 acquiring a correspondence table from a data storage area 103 storing a table associating one or a plurality of character string(s) and animation data as well as animation data, an animation data determine unit 104 determining corresponding animation data, an animation data acquisition unit 105 acquiring animation data, an animation data drawing unit 106 performing an animation drawing operation, a text drawing unit 107 performing a text drawing operation included in text data, a screen display unit 110 including a drawing memory 108 and a display unit 109. These functions are effected by CPU 10 of data display apparatus 1 executing a program stored in storage unit 12 or the like and controlling each unit shown in Fig. 31. The aforementioned data storage area 103 may be included in another apparatus such as a server outside of text data displaying apparatus 1. In such a case, correspondence table acquisition unit 102 and animation data acquisition unit 105 include communication means for acquiring data from data storage area 103 included in the external apparatus. Data storage area 103 may be included in a mail, when text data displaying apparatus 1 receives text data by the mail.

The text data input to text data displaying apparatus 1 is input to text data analyze unit 101 and text drawing unit 107.

Correspondence table acquisition unit 102 acquires correspondence table from data storage area 103. Correspondence table acquisition unit 102 inputs the acquired correspondence table to text data analyze unit 101.

Based on the correspondence table acquired from correspondence table acquisition unit 102, text data analyze unit 101 analyzes the input text data. Text data analyze unit 101 inputs a result of analysis to animation data determine unit 104.

Based on the analysis result acquired from text data analyze unit 101, animation data determine unit 104 determines which, in what order, and where to use animation data or the like when reproducing the text data. Then, animation data determine unit 104 inputs the determine information to animation data acquisition unit 105.

Based on the determine information acquired from animation data determine unit 104, animation data acquisition unit 105 acquires determined animation data from data storage area 103. Animation data acquisition unit 105 inputs the acquired animation data to animation data drawing unit 106.

Animation data drawing unit 106 writes the animation data acquired from animation data acquisition unit 105 to drawing memory 108 included in screen display unit 110.

On the other hand, text drawing unit 107 also writes the input text data to drawing memory 108 included in screen display unit 110.

The information written to drawing memory 108 is passed to displaying unit 109, and displayed on display unit 109.

When animation data analyzed from the text data input to text data displaying apparatus 1 requires to change animation display so that a plurality of frames are sequentially displayed, or a plurality of pieces of animation data are displayed in turn, or alternatively, when it requires to update the text display so that text data input to text data displaying apparatus 1 is displayed while changing its position, animation data drawing unit 106 and text drawing unit 107 further write animation data and text data to drawing memory 108, and display a new screen on display unit 109.

When the aforementioned drawing memory 108 includes each of the animation drawing memory, the text data drawing memory, and the screen displaying memory as separate areas, only data out of the animation data and text data necessary to be updated may newly be written. Specifically, when only text data is necessary to be updated and animation data is not necessary to be updated, the animation data may not newly be written to the animation drawing memory of drawing memory 108.

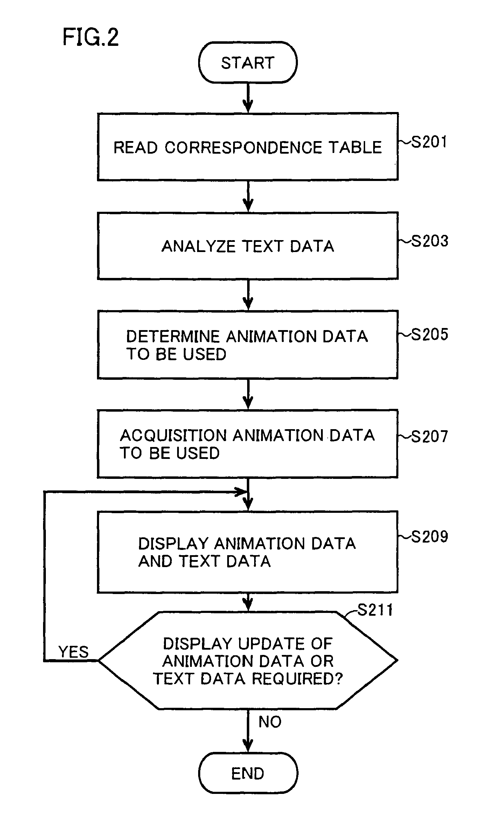

Next, referring to the flowchart of Fig. 2, a text data display process for displaying text data with text data displaying apparatus 1 according to the present embodiment is described. The process shown in the flowchart of Fig. 2 is realized by CPU 10 of text data displaying apparatus 1 reading a program stored in storage unit 12 or the like to control each unit shown in Fig. 31 to effect each function shown in Fig. 1.

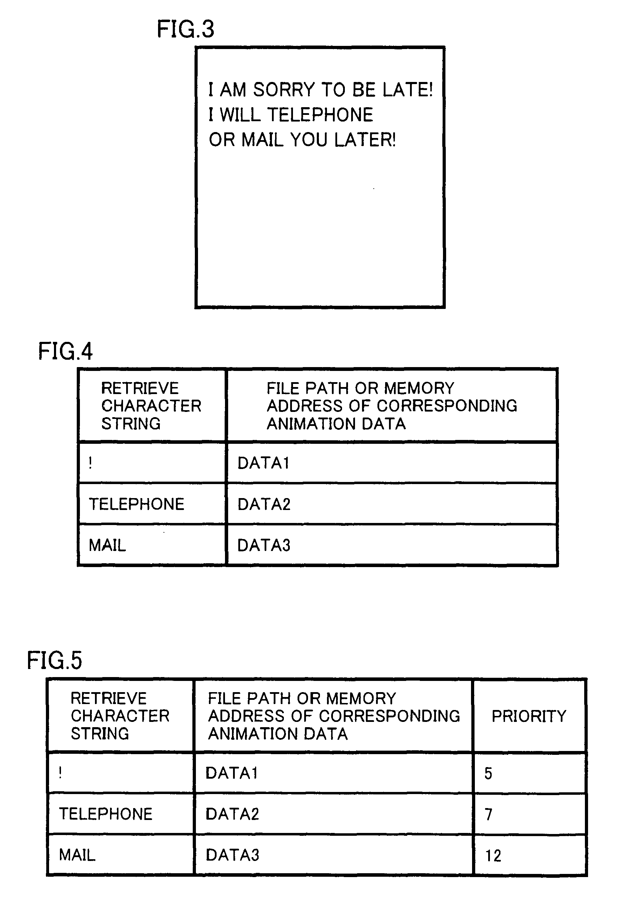

In the following, an exemplary case where text data "I am sorry to be late! ¥n I will telephone or mail you later!" is to be displayed is described. Here, "¥n" refers to a line feed code. When the text of the aforementioned text data is displayed on text data displaying apparatus 1, it is specifically shown as in Fig. 3.

Referring to Fig. 2, first, correspondence table acquisition unit 102 acquires a correspondence table from data storage area 103 (S201). Fig. 4 shows a specific example of a correspondence table acquired by correspondence table acquisition unit 102 at step S201.

Referring to Fig. 4, the correspondence table includes retrieve character strings as retrieve conditions, and information capable of specifying the location on a network such as a memory address, a file path or URL (Uniform Resource Locators) of animation data corresponding to the retrieve character strings.

It is noted that, the correspondence table is not limited to the table shown in Fig. 4, and it may record arbitrary conditional expressions such as date or the number of characters in place of character strings as search conditions. Data storage unit 103 may store a plurality of correspondence tables. In that case, correspondence table acquisition unit 102 further includes a correspondence table select unit that is not shown, and at step S201, the correspondence table select unit selects a corresponding correspondence table in accordance with season, date, weather information, or an explicit instruction. Correspondence table acquisition unit 102 acquires the correspondence table selected by the correspondence table select unit. Thus, corresponding correspondence table recording animation data of a specific cartoon character or of a theme can be utilized in the following process. Specifically, contents of a character string used as a search condition, animation data corresponding to a character string, and the combination thereof can be changed according to the correspondence table acquired at step S201.

The correspondence table shown in Fig. 4 may be the one that can be edited by text data displaying apparatus 1. Specifically, when text data displaying apparatus 1 further includes correspondence table edit means that is not shown, text data displaying apparatus 1 may change the retrieve character string "telephone" shown in Fig. 4 to another character string (for example "mobile phone"), or it may change animation data "Data3" corresponding to retrieve character string "mail" to another animation data (for example "Data1"). Alternatively, it may additionally register a new retrieve character string and animation data corresponding to that character string. A flag indicative of whether the correspondence table can be edited or not may be set to the correspondence table by the correspondence table editing means, so that the correspondence table can only be edited by the correspondence table edit means only when the flag indicative of edit exists.

Next, at text data analyze unit 101, text data is analyzed (S203). Specifically, text data analyze unit 101 collates text data with retrieve character strings recorded in the correspondence table acquired at step S201 to retrieve a retrieve character string.

In the specific example of text data shown in Fig. 3, the retrieve character strings recorded in the correspondence table specifically shown in Fig. 4 occur in the order of "!" "telephone" "mail" "!". Accordingly, at step S203, text data analyze unit 101 may output as a result of analysis all of the retrieved retrieve character strings in the occurrence order, or it may output only the retrieve character strings of a specific occurrence order. It may also output positional information that where a retrieve character string occurred in text data.

In the analysis process at step S203, a correspondence table that further records priority information in association for determining priority of each retrieve character string may be used, as shown in Fig. 5. In such a case, text data analyze unit 101 may output the priority information as an analysis result at step S203. When the correspondence table used is not the correspondence table recording such priority information shown in Fig. 4 also, based on the number of characters of a retrieve character string, text data analyze unit 101 may calculate priority information at step S203. The retrieve character string includes characters and symbols shown in Figs. 4 and 5, as well as pictorial characters such as "heart" and "face". A retrieve character string is not limited to the one configured with a plurality of characters and symbols, and it may be configured by single character or symbol.

Next, at animation data determine unit 104, based on the analysis result at step S203 and the correspondence table acquired at step S201, animation data to be used for animation drawing as well as an output manner, which is at least one of the order, timing, reproduction time, and position for displaying the animation data, are determined (S205).

In the output manner determined at step S205, the position for displaying animation data may change over time. For example, even when the animation data is originally of a still image, it may be displayed as animation by scrolling from the upper left side to the lower right side. Also, a moving direction thereof may be changed in accordance with an input of a user, or the moving direction may be changed at random.

In the analysis of text data at step S203, the number of occurrence of the character string is counted. At step S205, animation data determine unit 104 may determine to use animation data corresponding to a character string that has appeared a plurality of times, such as the character string "!" of the specific example of text data shown in Fig. 3, depending on the number of occurrence, or it may determine to use such data once only. For example, when priority information is output as a search result at step S203 using a correspondence table also recording priority information as specifically shown in Fig. 5, and text data related to animation drawing is the text data shown in Fig. 3, the priority of character string "mail" is the highest. Therefore, at step S205, animation data determine unit 104 may determine to display only animation data "Data3" that corresponds to character string "mail", or it may determine animation data to be used, the number of use, and the order of use, based on a value calculated taking the occurrence order and the number of occurrence into the priority.

Animation data drawing unit 106 of text data displaying apparatus 1 includes an output manner control unit. According to the output manner of animation data determined at step S205, the output of the animation data is restricted. Specifically, in accordance with the output manner of animation data determined at step S205, the output manner control unit restricts output of the animation data in accordance with conditions such as: the animation data is not to be displayed over a certain period; the animation data is not to be displayed if there is attached animation data when using a mail browser; and the frame rate of the animation is to be reduced when the remaining battery level is low. Thus, according to text data displaying apparatus 1 of the present invention, conditions can be changed depending on an application, whereby animation reproduction can be realized according to resources such as the remaining battery level, the memory constituting storage unit 12, and the occupying rate of CPU 10.

Next, at animation data acquisition unit 105, animation data to be used is acquired from data storage area 103 (S207). At step S207, animation data acquisition unit 105 acquires animation data to be used based on a file path or memory address information recorded in the correspondence table.

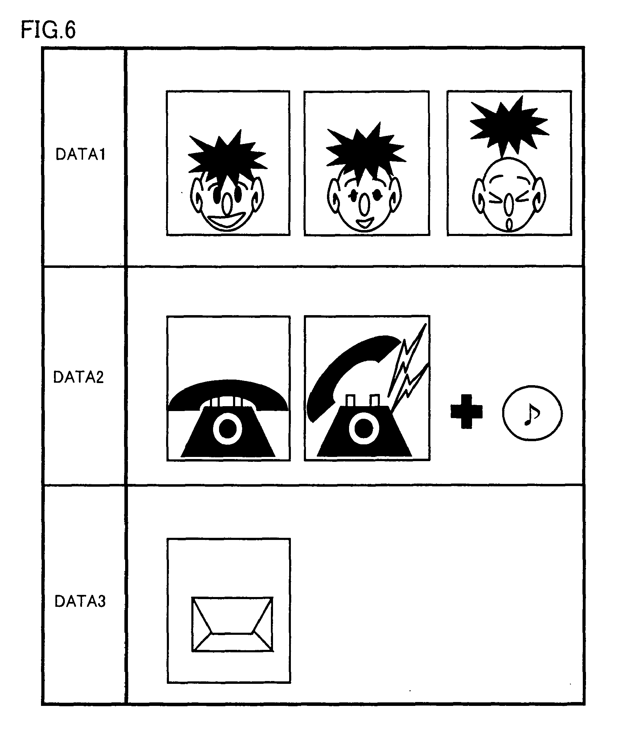

Fig. 6 shows a specific example of animation data "Data1", "Data2" and "Data3" recorded in the correspondence table of which specific example is shown in Fig. 4. Referring to Fig. 6, the animation data may be constituted by a plurality of frames such as shown by animation data "Data1", or it may be set so that sound is synchronously reproduced as shown by animation data "Data2". Also, it may be one still image as shown by animation data "Data3".

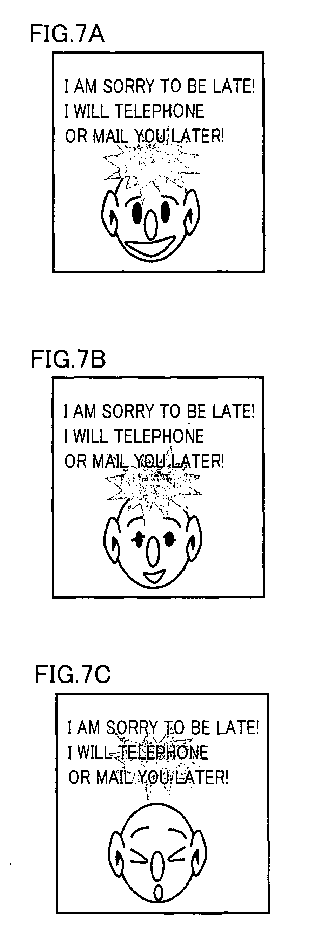

By animation data drawing unit 106 writing the aforementioned animation data to drawing memory 108, and text drawing unit 107 writing text data to drawing memory 108, the animation data and the text data are displayed on display unit 109 in screen display means 110 in turn as shown in Figs. 7A-7C (S209).

In Figs. 7A-7C, although the text is disposed over the animation to overlap and displayed, the text may be disposed under the animation to overlap, or the text may be inserted between animations to overlap, and displayed. Further, a plurality of pieces of animation data may be displayed simultaneously. When overlapping, text data or animation data may be displayed with its color or transparency being changed. This is realized by animation data drawing unit 106 and/or text drawing unit 107 further including a drawing correct unit correcting color or transparency of overlapping animation data and/or text to execute a drawing correction process to the relevant animation data and/or text. Alternatively, it is realized by display unit 109 further including a display correct unit detecting an overlap between animation data and text, and correcting and displaying color and transparency of animation data and/or text, to execute a display correction process to the relevant animation data and/or text.

In Figs. 7A-7C, while animation "Data1" is displayed as a background, for the purpose of emphasis, it may be differently displayed by flashing character string "!" corresponding to animation "Data1" or changing the size or color.

When screen display unit 110 can display with visual depth differences, part of or all of the text and animation may be displayed with visual depth differences.

When it is required to change animation display so that a plurality of frames are sequentially displayed or a plurality of pieces of animation data are displayed in turn, or, when it is required to update the text display so that text data is displayed while changing its position (YES at S211), the process goes back to step S209. Then, animation data drawing unit 106 or text drawing unit 107 writes the updated animation data or text data, whereby, a new screen is displayed at screen display means 110. Alternatively, at the correspondence table update unit included in correspondence table acquisition unit 102, the correspondence table read at step S201 may be updated, and based on the updated correspondence table, animation data to be used may be updated. Then, the foregoing process is repeated until update of animation data or text data is no more necessary (NO at S211), and the process ends.

It should be noted that, when a retrieve character string does not occur in the text data in analysis result at step S203, it may be determined at step S205 to use a specific or arbitrary animation data.

When text data displaying apparatus 1 includes the text data input means constituted by input unit 11 and the like, text data displaying apparatus 1 may execute the steps following step S201 to the input text data.

In the following, with specific examples, as described above referring to step S211, the case where the reproduced animation sequentially displays a plurality of frames and the case where a plurality of pieces of animation data are reproduced will be described in detail.

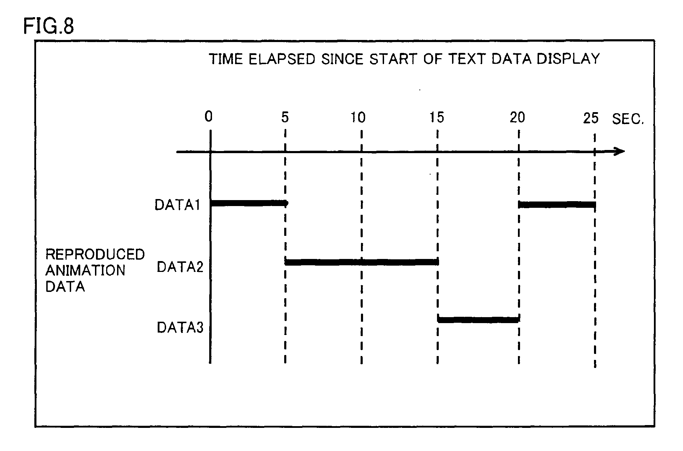

Fig. 8 shows a specific time-line example where, to text data in which retrieve character strings occur in the order of "!" "telephone" "mail" "!" shown in Fig. 3, corresponding plurality of pieces of animation data "Data1" "Data2" "Data3" "Data1" shown in Fig. 6 are reproduced sequentially. Here, it is assumed that a reproduction time of animation data "Data1" is 5 seconds, and a reproduction time of animation data "Data2" is 10 seconds. Although a still image such as animation data "Data3" does not normally have a reproduction time, it is assumed that animation data "Data3" is determined by text data displaying apparatus 1 to be displayed for 5 seconds.

As shown in Fig. 8, when reproducing a plurality of pieces of animation data, they are sequentially reproduced in accordance with the occurrence order of the corresponding retrieve character strings. Alternatively, they are not reproduced sequentially and may be reproduced simultaneously overlapping with one another, or at separate positions. They may be reproduced sequentially but not waiting for the end of preceding animation data. The reproduction time of each animation data may be set specifically for the animation data, or it may be set for text data displaying apparatus 1. Further, as shown in Fig. 5, when priority information is associated with retrieve character strings, the corresponding text data may be reproduced with a reproduction time or reproduction method corresponding to that priority. Specifically, a longer reproduction time may be assigned to animation data that corresponds to a higher priority retrieve character string. Also, animation data that corresponds to a higher priority retrieve character string may be overlapped over other animation data and simultaneously reproduced.

In the following, with specific examples, change of a display screen at text data displaying apparatus 1 when text data displaying apparatus 1 includes means for changing the contents of display screen such as scroll button, constituted by input unit 11 is described.

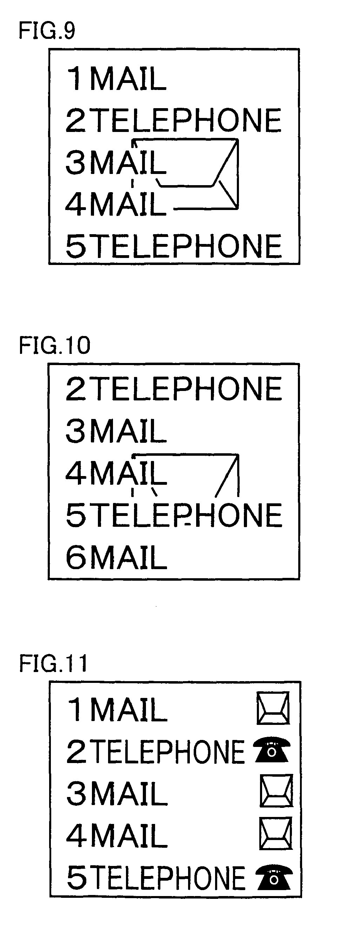

Figs. 9-14 show first to sixth display screens as specific examples of a display screen. It is assumed that the first to sixth display screens shown in Figs. 9-14 employ the correspondence table shown in Fig. 4 and the corresponding animation data shown in Fig. 6, and that text data " 1 mail ¥n2 telephone ¥n3 mail ¥n4 mail ¥n5 telephone ¥n6 mail ¥n" is displayed.

Referring to Fig. 9, animation data "Data3" is solely displayed as a background which corresponds to retrieve character string "mail" occurring for a plurality of times, over which text data is displayed. On the first screen, when a display change instruction for scrolling the display position of the text upward is provided, the display screen may be changed as shown in the second display screen shown in Fig. 10 so that only the text is scrolled upward, while in the background animation data is not scrolled.

Although animation data "Data3" is a still image, if it is a moving image, the animation data that is the background may be changed to animation data "Data2" corresponding to retrieve character string "telephone" at the timing where the moving image reproduction ends, where a prescribed time set at text data displaying apparatus 1 has passed, or where an instruction for changing display position is provided. Alternatively, animation data "Data2" and animation data "Data3" may be displayed on the screen simultaneously.

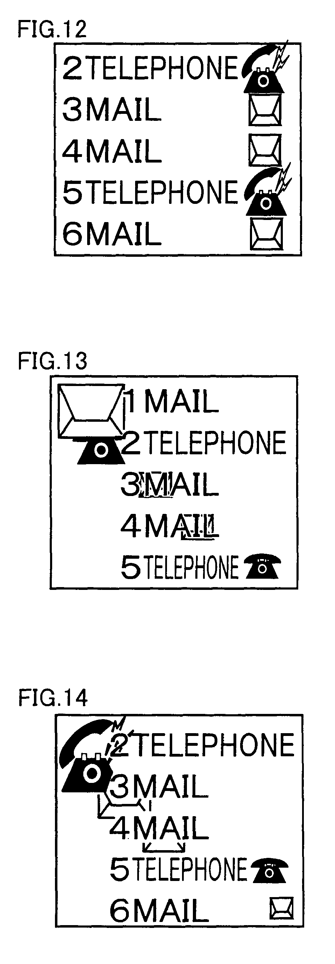

Referring to Fig. 11, an output manner of an animation data has been changed based on a retrieve character string display position, so that animation data corresponding to each retrieve character string is arranged in one-on-one relationship with the retrieve character string at a position defined relative to each retrieve character string. When a display change instruction is given so that the display position of a text is scrolled upward on the third screen, the display screen may be changed so that the animation data corresponding to the text is scrolled together with the text, as shown in the fourth display screen shown in Fig. 12.

Referring to Fig. 13, on the fifth display screen, an output manner of animation data has been changed based on the display position of other animation data so that animation data corresponding to each retrieve character string is arranged at a position, size and color defined relative to the other animation data. Specifically, on the fifth display screen, the output manner of the animation data corresponding to each of retrieve character strings "1 mail" "2 telephone" "3 mail" "4 mail" "5 telephone" has been changed so they are arranged in this order from upper left of the screen. Their size has also been changed proportional to this order.

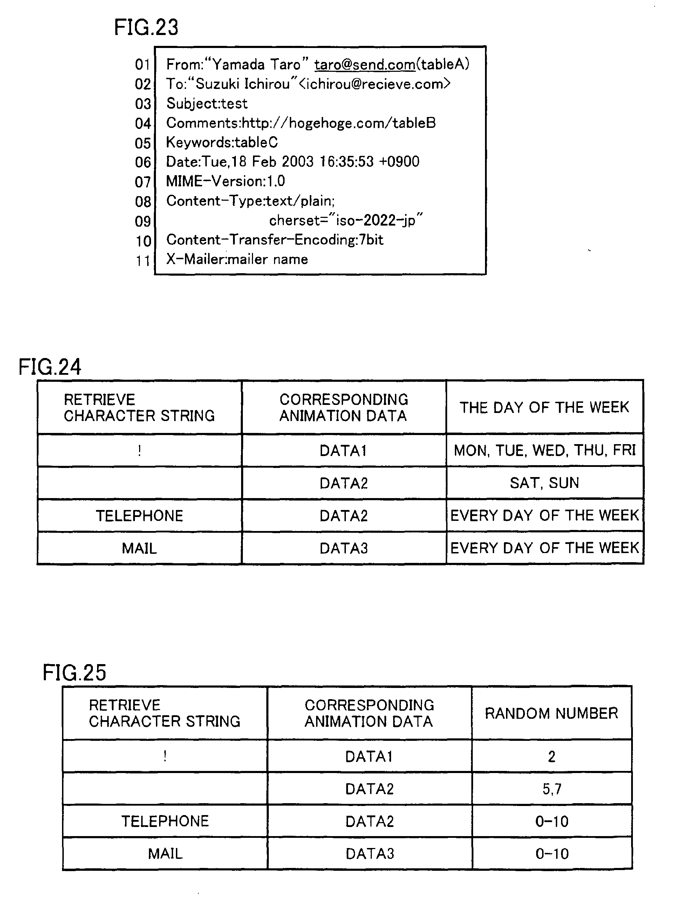

The output manner may be changed so that the display position, size or contents of an animation to be displayed, depending on the day of the week or the date. Specifically, using a correspondence table shown in Fig. 24 that associates animation data and a retrieve character string as well as animation data and the day of the week or the date, the output manner of animation data may be changed. Additionally, text data displaying apparatus 1 may change the output manner of part or all of the color tone of animation display contents or the like, such as the background color and hair color of a cartoon character, depending on the day of the week or the date.

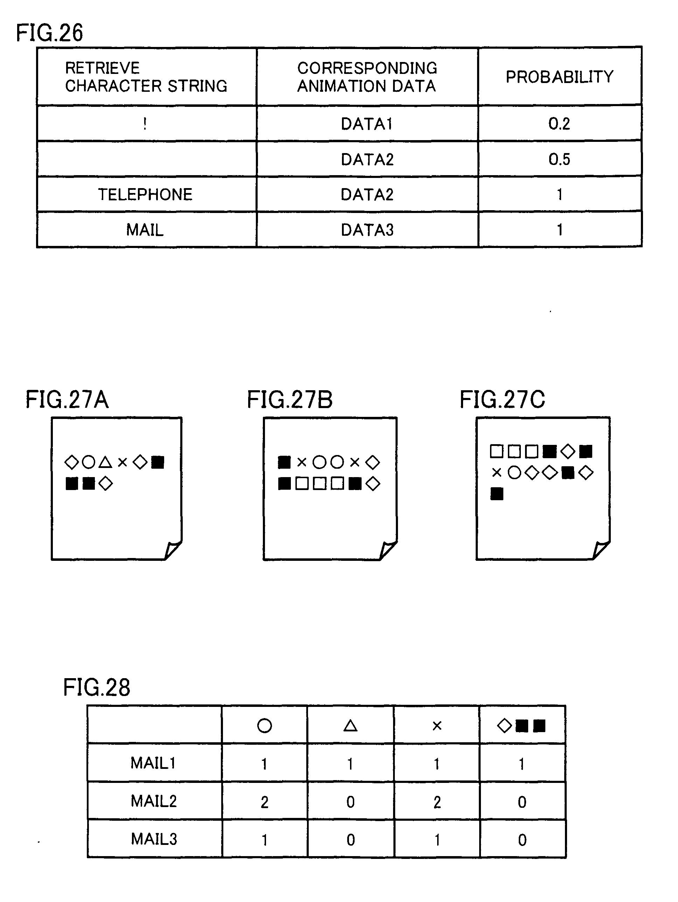

The output manner may also be changed by generating random numbers of 0 to 10 and using a correspondence table that associates animation data and the generated random numbers as shown in Fig. 25, so that animation data "Data1" is used when 2, animation data "Data2" when 5 or 7, and animation is not used otherwise. The range of the random numbers may be determined by text data displaying apparatus 1, or the correspondence table may separately store data as to the range for generating the random numbers. Alternatively, using a correspondence table associating a retrieve character string and display probability of corresponding animation data as shown in Fig. 26, the output manner may be changed to restrict the display probability of animation data for each retrieve character string, so that animation data "Data1" is displayed by 20%, and animation data "Data2" is displayed by 50%.

When a display change instruction is given so that the display position of a text is scrolled upward on the fifth display screen, the output manner as to arrangement, size and color of animation data corresponding to the text is recalculated and arranged, such as the sixth display screen shown in Fig. 14.

As shown on the fifth display screen, only the frontmost and upper left animation data corresponding to the retrieve character string "2 telephone" may be reproduced, while the lower right animation data corresponding to retrieve character string "5 telephone" is not reproduced and may be remained stopped with the first screen of the animation data until it is arranged at the frontmost position.

A correction that enables natural enter or exit may be provided, so that animation data is allowed to fade-in when the animation data is reproduced or when brought into a frame, or so that the animation data is allowed to fade-out when the reproduction of the animation data ends or when brought out from a frame. This is realized by animation data drawing unit 106 further including an animation enter/exit correct unit, wherein the animation enter/exit correct unit executes a correction process to a prescribed number of frames from reproduction initiation frame, or to a prescribed number of frames from the reproduction ending frame, when animation data drawing unit 106 writes relevant animation data to drawing memory 108.

Further, when animation data containing sound such as animation data "Data2" is reproduced, the output manner may be restricted so that no sound is produced depending on the situation. This is realized by animation data drawing unit 106 further including an output manner restrict unit for restricting the output manner. Here, the relevant situation is when a plurality of pieces of animation data are simultaneously reproduced, or when a silent mode is set to a mobile phone or the like.

Text data displaying apparatus 1 according to the present embodiment may determine animation data to be reproduced by performing the following process, in place of the process of steps S201,S203 in Fig. 2. In the following, description will be given with the example where text data displaying apparatus 1 displays text data of mails 1-3 shown in Figs. 27A-27C. In this case, each text data shown in Figs. 27A-27C contains retrieve character strings of the type and in the number shown in Fig. 28.

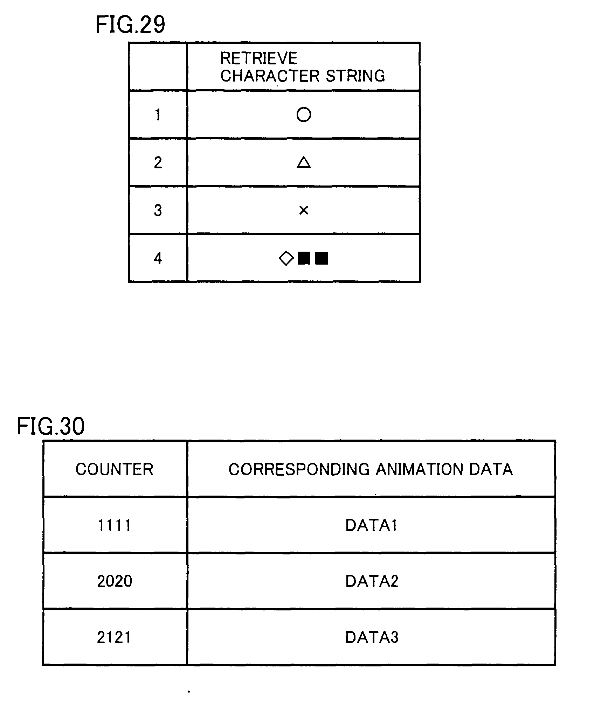

Text data displaying apparatus 1 counts retrieve character strings included in text data shown in Figs. 27A-27C based on a retrieve character string table shown in Fig. 29 at text data analyze unit 101. The retrieve character string table shown in Fig. 29 may be set in advance in text data displaying apparatus 1. Alternatively, it may be stored in data storage unit 103, so that correspondence table acquisition unit 102 acquires the retrieve character string table from data storage unit 103 when executing the process, and passes it to text data analyze unit 101. In such a case, similarly to step S201, a relevant correspondence table may be selected and acquired from a plurality of correspondence tables, depending on season, date, weather information, an explicit instruction or the like. Similarly to step S211, the correspondence table may be updated as necessary, when animation data or text data to be displayed is updated.

Although the counting method at text data analyze unit 101 is not limited in the present invention, one example thereof is as follows. In a count method where the count is reset to zero for every ten occurrence of retrieve character strings, that is, when only the one place of the retrieve character string number is counted, the counter that is the count result can be expressed by the number of digits of the number of types of the retrieve character strings. Specifically, when the retrieve character strings shown in Fig. 29 are of four types, the counter may be expressed by four digits.

In such a case, as a correspondence table, text data displaying apparatus 1 stores a correspondence table associating the counter and the animation data in data storage unit 103. Fig. 30 shows a specific example of the correspondence table associating the counter and the animation data. Correspondence table acquisition unit 102 acquires a correspondence table such as the one shown in Fig. 30 from data storage unit 103.

In a count method where the counter is reset to 0000 every time a mail is displayed when displaying text data that is mail 1 shown in Fig. 27A in text data displaying apparatus 1, the counter at text data analyze unit 101 1 is 1111. Then, at step S205, animation data determine unit 104 refers to the counter and the correspondence table shown in Fig. 30, and determines animation data "Data1" as animation data to be displayed. Similarly, when displaying text data that is mail 2 shown in Fig. 27B, the counter is 2020, and therefore animation data determined unit 104 determines animation data "Data2" as animation data to be displayed. When displaying text data that is mail 3 shown in Fig. 27C, the counter is 1010, and there is no corresponding animation data in the correspondence table. In this case, animation data determine unit 104 determines that there is no animation data to be displayed at step S205, and text data displaying apparatus 1 does not display animation. Alternatively, animation data determine unit 104 may determine a predetermined animation data.

In a counting method where the counter is not reset every time a mail is displayed, when displaying at counter 0000 text data that is mail 1 shown in Fig. 27A and thereafter displaying text data that is mail 3 shown in Fig. 27C or when displaying text data that is mail 3 and thereafter displaying text data that is mail 1, the counter at text data analyze unit 101 attains 2121. Then, at step S205, animation data determine unit 104 refers to the counter and the correspondence table shown in Fig. 30, and determines animation data "Data3" as animation data to be displayed. When the text data that is mail 3 is continuously displayed twice at counter 0000, at the second time the counter attains 2020, and animation data determine unit 104 determines animation data "Data2" as animation data to be displayed.

Another counting method includes a method for counting retrieve character strings depending on information associated with text data, for example, date information, the day of the week information, presence of attached animation data and the like. Specifically, a counting method where the counter of a prescribed retrieve character string is doubled for a prescribed the date or the day of the week, a counting method where all counters are reset to zero when there is an attached animation data and the like may be included.

Alternatively, as for text data such as a mail of a mobile phone, a separate counter may be prepared for each information related to the sender, for example a telephone number. A count method where a counter of a prescribed retrieve character string is accumulated by the last digit of the telephone number is also possible.

Next, a memory area including drawing memory 108 is described.

As described above, when overlapping and displaying text and animation, in order to display animation as background (below) and to display text thereon (above), first the animation is written to drawing memory 108, and the text is directly written to drawing memory 108 to which the animation has been written. Alternatively, the contents of drawing memory 108 to which the animation has been written is copied to another memory area, which is not shown, and the text data is written to the memory area having been copied. In either case, preferably drawing memory 108 to which the animation is written is at least twice as large as the memory area required for displaying the animation data. The display area for the animation data may be a portion of the display area of the screen, or it may be larger than that. Also, it may be smaller than or larger than the display area for the text data.

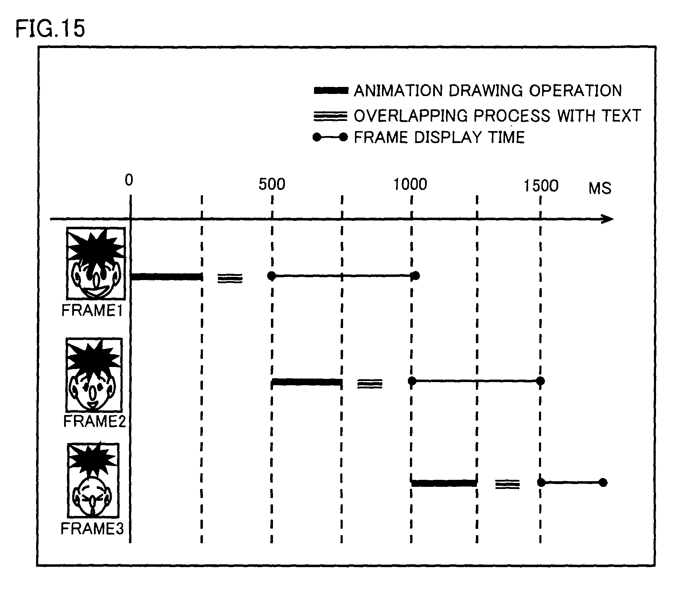

Fig. 15 shows a specific example of timing for writing animation data to drawing memory 108 to be overlapped with text data. Fig. 15 shows timing for writing animation data "Data1" constituted by "Frame1", "Frame2" and "Frame3", in which "Frame 1" is displayed for 500-1000 ms, "Frame2" is displayed for 1000-1500 ms, and "Frame3" is displayed from 1500 ms. In Fig. 15, each frame is written to drawing memory 108 by 0 ms-500 ms in turn, and each requires a time period of 250 ms for the writing process and a time period of 100 ms for the process of overlapping with text data. Here, although each frame is written periodically by prescribed intervals, the time for writing each frame be not be determined strictly considering the resource of text data displaying apparatus 1 or the like. Therefore, when a preceding frame drawing operation ends and thereafter when 250 ms has passed, the next frame may be written.

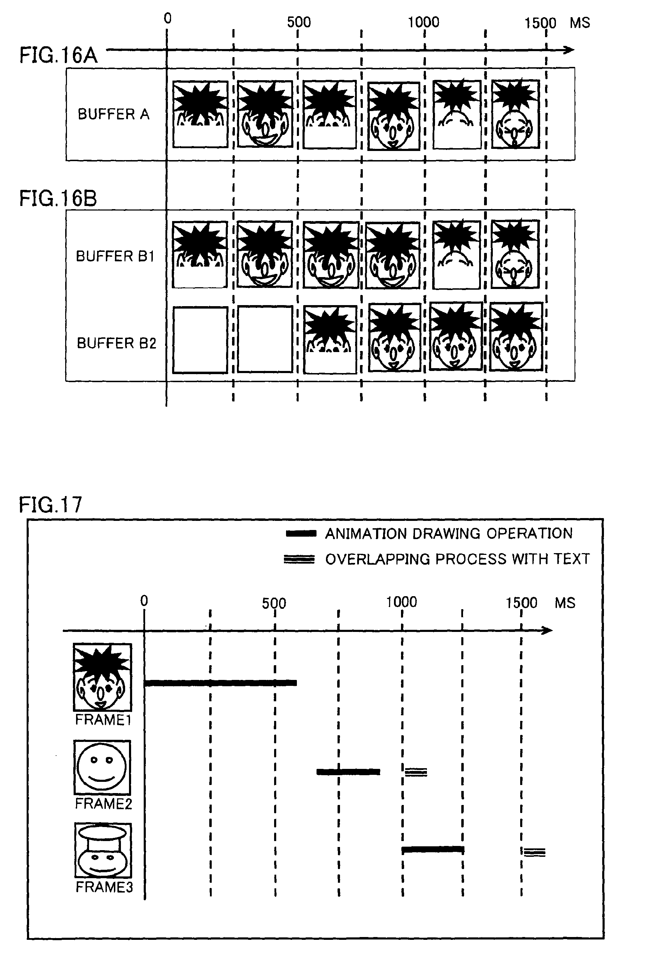

Two specific examples of data writing methods of animation data to the memory area shown, and respective situations are shown in Figs. 16A and 16B. In Figs. 16A and 16B, Buffer A, Buffer B1, and Buffer B2 are the memory areas equivalent to the animation data display area.

Referring to Fig. 16A, in a first method where animation data "Data1" is written using only one Buffer A, since the time required for the writing process for each frame is 250 ms as described above, "Frame1", "Frame2", "Frame3" are fully written to the memory area in 250-500 ms, 750-1000 ms, and 1250-1500 ms, respectively. Except for those time period, the frames have not been fully written to the memory area. Therefore, when an instruction for changing the displaying position is provided 501 ms after initiation, it must be suspended for 750 ms where "Frame2" writing to the memory area is finished, and then the process of overlapping with the text data is performed. Accordingly, the response may not be quick. Therefore, in order to prevent such a slow response, in the first method, it is preferable to overlap and display the unfinished animation data and text data. It is also preferable to display only the text data, without performing the overlapping process.

In the second method where animation data "Data1" is written using two buffers of Buffer B1 and Buffer B2, referring to Fig. 16B, "Frame1" and Frame3" are written using Buffer B1, and "Frame2" is written using Buffer B2 . In that case, to Buffer B1, "Frame1" is fully written in 250-1000 ms, "Frame3" is fully written in 1250-1500 ms, and to Buffer B2, "Frame2" is fully written in 750-1500 ms. Accordingly, except for 0-250 ms period, a process of overlapping with text data can be immediately performed if there is an instruction for changing the display position, and hence, the response is always quick. Specifically, for example, when an instruction for changing the display position is provided at 501 ms, the contents of animation data written to Buffer B1 is used, and when an instruction for changing the display position is provided at 1001 ms, the contents of animation data written to Buffer B2 is used, so that the process of overlapping with text data can be performed. Specifically, with the second method, by alternately writing each frame constituting animation data using a plurality of buffers of at least two, a fully written animation can constantly be placed in any of the buffers. As a result, a quick response to an instruction for changing the display position is attained.

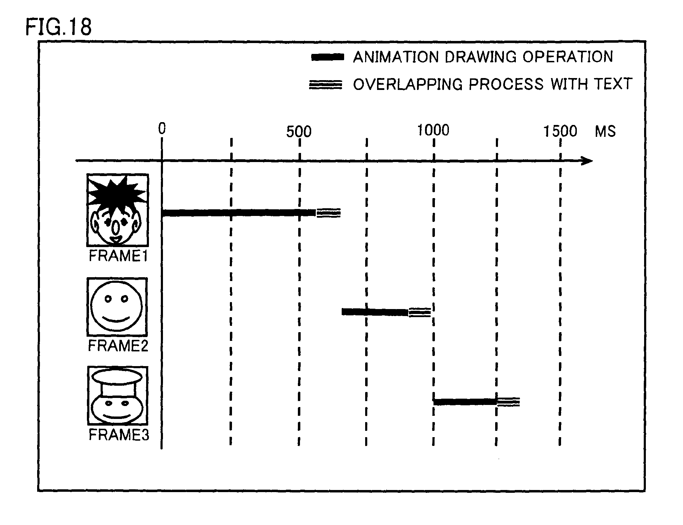

Next, overlapping of text data and animation data will be described. Figs. 17 and 18 respectively show specific examples of timing of first and second methods, from overlapping text data and animation data to updating screen display. Figs. 17 and 18 show cases where screens of "Frame1"-"Frame3" are written to a memory area in turn, wherein it is assumed that each frame drawing operation requires a time period of 550 ms for "Frame 1" and 250 ms for "Frame2", and a writing interval is 100 ms. It is assumed that 100 ms is required for performing the process of overlapping the animation data and the text data having been written to the memory area.

According to the first method shown in Fig. 17, the control unit constituted by CPU 10 controlling drawing operation of text on text drawing unit 107 checks for every 500 ms if the animation drawing operation is completed. When the drawing operation is completed, the control unit executes the text drawing operation on text drawing unit 107, and overlaps and displays with the text data. According to the first method, as shown in Fig. 17, writing of "Frame1" completes at 550 ms, and writing of "Frame2" completes at 1000 ms. Therefore, a process time for executing overlapping with text data cannot be ensured, and "Frame 1" is not displayed.

On the other hand, according to the second method shown in Fig. 18, in a case where the control unit is informed of the completion of animation drawing operation on animation data drawing unit 106, when the control unit detects the completion of animation drawing operation, it immediately causes text drawing operation to be executed at text drawing unit 107, whereby writing can be updated as overlapped with the text data. Accordingly, with the second method, the number of frames not displayed can be reduced for the animation of which reproduction time is determined.

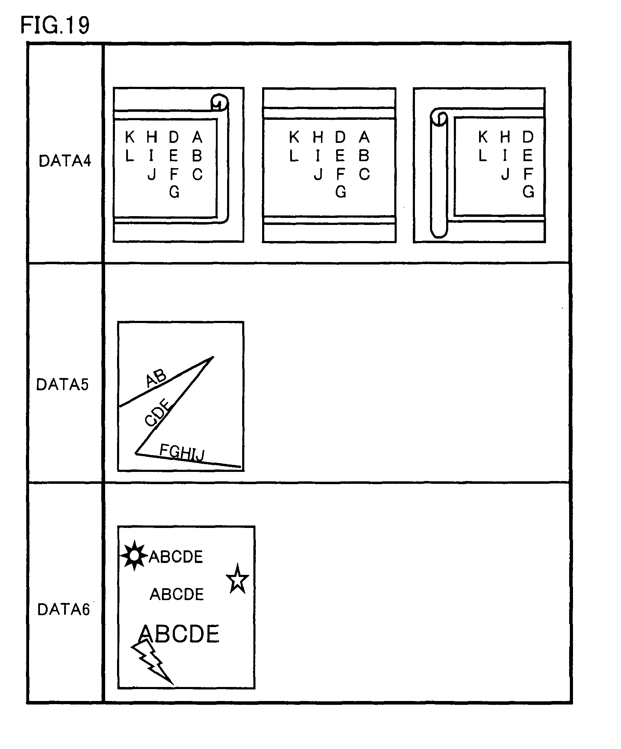

As shown in Fig. 19, animation data may include information as to how to display the text data. Fig. 19 shows specific example of animation data "Data4", "Data5", "Data6".

Referring to Fig. 19, in a text data displaying method such as when activating a mail viewing application of a mobile phone, usually the text data is shown in horizontal line orientation and scrolled vertically, whereas animation data "Data4" causes the text data displayed together to be shown in vertical line orientation and to be scrolled horizontally. Additionally, it may be scrolled horizontally automatically when a prescribed time period has passed, without an instruction from a user for scrolling.

Referring to Fig. 19, animation data "Data5" causes the text data displayed together to be arranged along a particular line and displayed, and also causes the text data to be scrolled along the line and displayed, when scrolled. Additionally, it may cause the data to be displayed along a curved line.

Referring to Fig. 19, the animation data "Data6" includes information for causing the text data displayed together to be displayed with modification to size, bold, italicize, and underline characters. Additionally, when information specifying color and font of the text, the text may be displayed according to the information.

When animation data acquisition unit 105 acquires such animation data from data storage area 103, animation data drawing unit 106 writes the animation data to drawing memory 108, and passes information as to how to display the text data to text drawing unit 107. Text drawing unit 107 writes the text data to drawing memory 108 based on the information passed by animation data drawing unit 106.

Further, an analysis range of text data at text data analyze unit 101 will be described. The text data range in text data analysis unit 101 may be the entire range of the text data, or it may be a prescribed range by setting as follows.

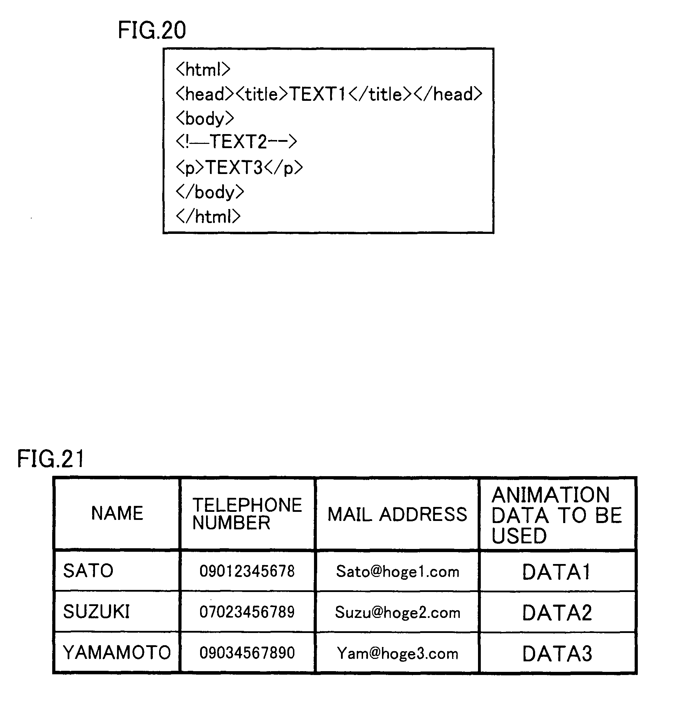

Fig. 20 shows a specific example of text data, showing a specific example of text data described in HTML (Hypertext Markup Language).

To the text data described in HTML as shown in Fig. 20, text data analyze unit 101 can perform analysis in a limited manner. Specifically, if text data analyze unit 101 is set in advance to analyze the portion of text data interposed between "<body>" and "</body>", while excluding the portion interposed between "<! - -" and "- - >", for example, only "TEXT3" shown in Fig. 20 can be set as the analysis range. Thus, text data analyze unit 101 can be used in a limited manner.

The analysis method at text data analyze unit 101 may be the one where a combination of a particular character and a character string in a correspondence table is retrieved from text data. For example, it may be an analysis method of retrieving the character strings "<!" "<telephone" "<mail" from the text data, when the analysis is performed with the particular character of "<" and using the correspondence table shown in Fig. 4. The particular character may be of a plurality of numbers, and the position thereof is not limited to the top of a character string in a correspondence table, and it be the middle or the last of the character string.

When text data displaying apparatus 1 is a mobile phone, and functions as a mail browser for viewing a mail, the analysis range at text data analysis unit 101 may not be limited to the body of the mail, and the analysis range may include information such as sender, destination, title and the like. Here, preferably, the mobile phone that is text data displaying apparatus 1 stores an address book recording the correspondence between the telephone number or mail address of a transition party and animation data to be used as shown in Fig. 21 in a storage area, which is not shown. By storing such an address book, it can be used in place of the aforementioned correspondence table. Specifically, for example, the mobile phone that is text data displaying apparatus 1 displays a mail received from an address "Sato@hoge1.com" using animation data "Data1". The mobile phone that is text data displaying apparatus 1 may be capable of changing the animation data to be used by editing the address book. For example, when it is desired to display a mail received from the address "Yam@hoge3.com" using animation data "Data2", the name "Yamamoto" in the address book is edited so that animation data to be used is changed from "Data2" to "Data3".

### Modification

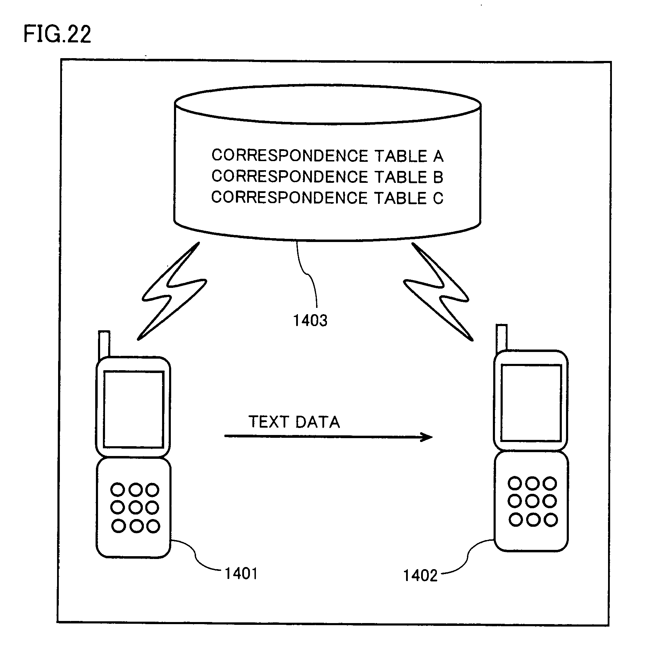

Referring to Fig. 22, text data displaying apparatuses 1401 (sender side), 1402 (receiver side) in the modification each correspond to a mobile phone or the like, and include communication means for communicating to each other as shown by input unit 11 and output unit 13 in Fig. 31. Further, text data displaying apparatuses 1401 and 1402 also communicate with server 1403.

Server 1403 stores a correspondence table, animation data or the like, and includes data storage unit 103 shown in Fig. 1.

In the modification, when sending text data to other text data displaying apparatus 1402, text data displaying apparatus 1401 sends correspondence table identification information that correspondence table A is used as a correspondence table for displaying that text data, as included in the header of that text data. Alternatively, when sending text data to other text data displaying apparatus 1402, text data displaying apparatus 1401 may transmit a control signal to server 1403 so that server 1403 transmits correspondence table A to text data displaying apparatus 1402. Further, text data displaying apparatus 1401 may transmit to other text data displaying apparatus 1402 correspondence table A to be used with text data as well as corresponding animation data.

When correspondence table A is used to display the text data at text data displaying apparatus 1401, if correspondence table A is not stored in built-in data storage unit 103, text data displaying apparatus 1401 may send a control signal to server 1403 so that the contents of correspondence table A is transmitted, or it may transmit a control signal so that all the correspondence tables stored in server 1403 are transmitted.

When text data displaying apparatus 1402 receives the text data from text data displaying apparatus 1401, if correspondence table identification information that correspondence table A is used is included in the received text data, text data analyze unit 101 extracts the correspondence table identification information by analyzing the text data, and acquires the corresponding correspondence table A from data storage unit 103 based on the information. Then, using the correspondence table A, it performs text data display.

Text data displaying apparatus 1402 of the receiver may transmit a control signal to server 1403 so that contents of correspondence table A is transmitted when correspondence table A is not stored in built-in data storage unit 103, or it may transmit a control signal so that all the correspondence tables stored in server 1403 are transmitted.

It is also possible for text data displaying apparatus 1401 to transmit to text data displaying apparatus 1402 correspondence table identification information that is identification information of the correspondence table used for displaying the text data as included in the text data. In the following, as a specific example where correspondence table identification information is included in text data, a case where text data is transmitted using Internet mail from text data displaying apparatus 1401 is described.

Fig. 23 shows a specific example of the header portion of an Internet mail. Each information included in the header portion of the Internet mail is referred to as a field, and described in the header portion in the format "field name: field contents".

In the specific example shown in Fig. 23, the header portion of the Internet mail includes fields representing information such as sender (line 01), destination address (line 02), comments (line 04) and keywords for search (line 05). Additionally, the portion between "(" ")" as shown in line 1 is treated as a comment.

As shown in Fig. 23, the aforementioned correspondence table identification information may be included as a comment shown in line 01, or it may be included as a comment field as shown in line 04, or it may be included in the keyword field as shown in line 05. It may be included in another field. Another field may include a field such as a use-defined field that can be defined by a user arbitrarily.

The identification information itself may be the name of a correspondence table or the number that can identify a correspondence table such as the comment of line 01 or the keyword of line 05, or it may be URL that can acquire a correspondence table such as the comment of line 04.

As above, by executing the aforementioned process, the text data displaying apparatus of the present invention achieves various text display when displaying text data on the text data displaying apparatus, such as text display employing animation corresponding to the character string included in the text data as the background, text display employing such animation in the foreground, or text display employing such animation in the background and foreground. Accordingly, even with a plain text represented by a simple mail without any attached still image or animation image, corresponding animation data is overlapped on the plain text and displayed, whereby the user can enjoyably view the text contents.

With the text data displaying apparatus of the modification, by sending only plain text to other text data displaying apparatus even when animation data and text are desired to be displayed, the other text data displaying apparatus acquires animation data, which is then displayed with the text. Accordingly, the transmission amount can be reduced as compared to the case where text data and a still image or an animation image are sent.

It is also possible to provide the text data displaying method executed at the aforementioned text data displaying apparatus 1 as a program. Such a program can be provided as a program product recorded in a computer readable recording medium 15 such as a flexible disk, CD-ROM (Compact Disk-Read Only Memory), ROM (Read Only Memory), RAM (Random Access Memory) and a memory card associated with a computer. Alternatively, the program can be provided as recorded in storage unit 12 that is a recording medium such as hard disk built-in a computer. The program can also be provided by downloading through a network.

The provided program product is installed in a program storage unit such as hard disk and executed. The program product includes the program itself and the recording medium recording the program.

### Industrial Applicability

As above, according to the present invention, since text data can be displayed appropriately, the present invention can be advantageously applied to a text data displaying apparatus, a mobile phone apparatus, a text data displaying method, and text data displaying program.

## Claims

1. A text data displaying apparatus, comprising:
a text data analyze unit that has a correspondence table associating a pictorial character and animation data and that analyzes a pictorial character included in text data being input;
an animation data determine unit determining animation data corresponding to the pictorial character having been analyzed using said correspondence table;
a text data drawing unit writing the text data having been input;
an animation data drawing unit writing the animation data having been determined; and
a screen display unit displaying the text data having been written and the animation data having been written so as to be overlapped with each other.

2. The text data displaying apparatus according to claim 1, wherein
in an order of occurrence of said pictorial character in said text data, reproduction of said animation data corresponding to said pictorial data is sequentially started.

3. The text data displaying apparatus according to claim 1, further comprising
a display change instruct unit accepting an instruction of changing display, said display change instruct unit scrolling a display position of said text data in accordance with the instruction having been accepted, and not scrolling a display position of said animation data in accordance with the instruction having been accepted.

4. A text data displaying apparatus, comprising:
a text data analyze unit analyzing a retrieve character string included in text data being input;
an animation data determine unit determining animation data corresponding to the retrieve character string having been analyzed;
a text data drawing unit writing the text data having been input;
an animation data drawing unit writing the animation data having been determined; and
a screen display unit displaying the text data having been written and the animation data having been written so as to be overlapped with each other.

5. The text data displaying apparatus according to claim 4, wherein
in an order of occurrence of said retrieve character string in said text data, reproduction of said animation data corresponding to said retrieve character string is sequentially started.

6. The text data displaying apparatus according to claim 4, further comprising
a display change instruct unit accepting an instruction of changing display, said display change instruct unit scrolling a display position of said text data in accordance with the instruction having been accepted, and not scrolling a display position of said animation data in accordance with the instruction having been accepted.

7. A mobile phone apparatus comprising the text data displaying apparatus according to claim 4.

8. A computer readable medium recording a program for causing a computer to execute a text data displaying process that includes the steps of:
analyzing a retrieve character string included in text data being input;
determining animation data corresponding to the retrieve character string having been analyzed;
writing the text data having been input;
writing the animation data having been determined; and
displaying the text data having been written and the animation data having been written so as to be overlapped with each other.
